# EUROPÄISCHE PATENTSCHRIFT

(11) **EP 3 460 294 B1**
(45) Veröffentlichungstag und Bekanntmachung des Hinweises auf die Patenterteilung: **25.03.2020**
(21) Anmeldenummer: 17192038.2
(22) Anmeldetag: 20.09.2017
(51) Int. Cl.: F16H 57/04

(54) **GETRIEBE MIT ÖLKÜHLUNG**
TRANSMISSION WITH OIL COOLING
TRANSMISSION À REFROIDISSEMENT PAR L'HUILE

(43) Veröffentlichungstag der Anmeldung: 27.03.2019
(73) Patentinhaber: Flender GmbH, 46395 Bocholt (DE)
(72) Erfinder: Becka, Simon, 45128 Essen (DE)
(74) Vertreter: Maier, Daniel Oliver

(56) Entgegenhaltungen:
- DE-A1-102009 022 329
- DE-A1-102012 022 023
- DE-A1-102012 022 025

## Beschreibung

Die vorliegende Erfindung betrifft ein Getriebe umfassend ein Getriebegehäuse mit einem Ölreservoir und einem eine Öffnung des Getriebegehäuses verschließenden Getriebegehäusedeckel, Zahnräder aufnehmende Getriebewellen, die über einen Motor antreibbar sind, einen außen am Getriebegehäuse angeordneten Lüfter, einen außen am Getriebegehäuse angeordneten Kühler, dem von dem Lüfter Kühlluft zugeführt wird, eine Ölförderpumpe, die Öl durch Ölförderleitungen aus dem Ölreservoir in den Kühler pumpt, und eine Ölrückführleitung, die Öl aus dem Kühler zurück in das Getriebegehäuse leitet. So ein Getriebe ist aus der DE102012022023 bekannt.

Getriebe sind im Stand der Technik in unterschiedlichsten Ausgestaltungen bekannt. Während des Betriebs können sie sich durch die anfallende Verlustleistung sehr stark erwärmen, was zu einer Limitierung der zulässigen mechanischen Grenzleistung führen kann. Als Gegenmaßnahme werden Getriebe häufig gekühlt, um möglichst die volle mechanische Leistung abrufen zu können.

Zur Kühlung eines Getriebes gibt es grundsätzlich mehrere technische Lösungen.

Zum einen ist es bekannt, das Getriebeöl über die Getriebegehäuseoberfläche zu kühlen. Die erzielbare Kühlleistung ist hierbei jedoch stark durch die zur Verfügung stehende Getriebegehäuseoberfläche begrenzt. Grundsätzlich kann die Oberfläche zwar durch das Vorsehen von Rippen oder dergleichen vergrößert werden. Dies ist allerdings oft kostenintensiv.

Zum anderen können zur Kühlung von Getrieben externe Kühlaggregate eingesetzt werden. Hierbei fördert eine Ölförderpumpe das Öl aus dem Getriebegehäuse zu einem extern aufgestellten Kühlaggregat, das meist in Form eines Lamellenkühlers als Öl-Luft-Kühler ausgeführt ist. Problematisch ist hierbei jedoch, dass der benötigte Aufstellraum für das Gesamtsystem vergrößert wird und das Kühlaggregat eine weitere separate Baugruppe darstellt, was häufig unerwünscht ist.

Eine weitere Möglichkeit besteht darin, die Ölkühlung direkt am Getriebe vorzusehen. So beschreibt beispielsweise die EP 2 917 609 B1 ein Getriebe der eingangs genannten Art, bei dem der als Lüfterrad ausgebildete Lüfter ebenso wie die Ölförderpumpe außen am Getriebegehäuse angeordnet ist und jeweils über im Getriebe bereits vorhandene Getriebewellen angetrieben werden. Auch der Kühler ist außen am Getriebegehäuse positioniert. Er weist die Form einer sich mäanderartig entlang der Oberfläche des Getriebegehäuses erstreckenden Rohrleitung auf. Die in der EP 2 917 609 B1 beschriebene Getriebebauform behebt zwar den Nachteil eines zusätzlich aufzustellenden Kühlaggregats. Allerdings ist der Ölvolumenstrom abhängig von der Wellendrehzahl der die Ölförderpumpe antreibenden Getriebewelle. Dies hat zur Folge, dass zur Vergrößerung des Ölvolumenstroms bei vorgegebener Getriebewellendrehzahl eine größere Pumpe eingesetzt werden muss. Analoges gilt natürlich auch für den Kühlluftvolumenstrom des Lüfters. Zudem erfolgt bei laufendem Getriebe stets eine Kühlung, also auch bei sehr niedrigen Umgebungstemperaturen, bei denen eigentlich keine Kühlung benötigt wird.

Ausgehend von diesem Stand der Technik ist es eine Aufgabe der vorliegenden Erfindung, ein Getriebe der eingangs genannten Art mit alternativem Aufbau zu schaffen.

Zur Lösung dieser Aufgabe schafft die vorliegende Erfindung ein Getriebe der eingangs genannten Art, das dadurch gekennzeichnet ist, dass ein separater Antriebsmotor vorgesehen ist, der den Lüfter und die Ölförderpumpe unabhängig von den Getriebewellen des Getriebes antreibt, und dass der Antriebsmotor, der Lüfter, der Kühler und die Ölförderpumpe an dem Getriebegehäusedeckel befestigt sind. Erfindungsgemäß bilden der Getriebegehäusedeckel, der Antriebsmotor, der Lüfter, der Kühler und die Ölförderpumpe somit eine über den Getriebegehäusedeckel an dem Getriebegehäuse befestigte, sehr kompakt ausgebildete Kühleinheit, was für die Durchführung von Wartungs- und Reparaturarbeiten sehr vorteilhaft ist, da alle Komponenten gut erreichbar sind und problemlos montiert und demontiert werden können. Darüber hinaus kann eine solche Einheit an nahezu jeder Position eines Getriebegehäuses angeordnet werden, was den Konstrukteuren bei der Getriebeauslegung viele Freiheiten lässt. Dank der Tatsache, dass der Antriebsmotor erfindungsgemäß als separater Motor vorgesehen ist, also zusätzlich zu einem die Getriebewellen des Getriebes antreibenden Motor, lassen sich über geeignete Wahl der Drehzahl des separaten Antriebsmotors zudem der dem Kühler zugeführte Ölvolumenstrom ebenso wie der vom Lüfter generierte Kühlluftvolumenstrom unabhängig von der Betriebsweise des Getriebes einstellen. Ein weiterer Vorteil, der mit dem Einsatz eines separaten Antriebsmotors zum Antreiben der Ölförderpumpe und des Lüfters einhergeht, besteht darin, dass die Ölförderpumpe und der Lüfter nicht drehrichtungsunabhängig ausgelegt werden müssen. Entsprechend können diese Komponenten optimiert ausgelegt werden, was einen geringeren Energieverbrauch ebenso wie eine Reduzierung der Schallemissionen des Lüfters nach sich zieht.

Bevorzugt ist der Antriebsmotor ein Elektromotor, was zu einem einfachen Aufbau führt.

Gemäß einer Ausgestaltung der vorliegenden Erfindung ist der Kühler ein ringförmiger Radialkühler, der den Lüfter umgibt und dem die Kühlluft von dem Lüfter radial zugeführt wird. Der Einsatz eines solchen Radialkühlers führt zu einem sehr kompakten und effizienten Aufbau.

Die Ölförderpumpe ist vorteilhaft innen an dem Getriebegehäusedeckel befestigt. Damit ist die Ölförderpumpe durch den Getriebegehäusedeckel bzw. durch das Getriebegehäuse selbst vor äußeren Einflüssen geschützt.

Bevorzugt ist eine den Antriebsmotor und den Lüfter abdeckende Haube vorgesehen, die eine mit einem Filter versehene Luftansaugöffnung aufweist. Auf diese Weise kann eine Verschmutzung des Lüfters ebenso wie des Kühlers reduziert werden.

Gemäß einer Ausgestaltung des erfindungsgemäßen Getriebes ist ein die aktuelle Öltemperatur im Getriebegehäuse erfassender Sensor vorgesehen, und eine Antriebsmotorsteuerung ist vorgesehen und dazu ausgelegt, die Drehzahl des Antriebsmotors in Abhängigkeit von den vom Sensor erfassten Signalen basierend auf einer Soll-Öltemperatur zu regeln.

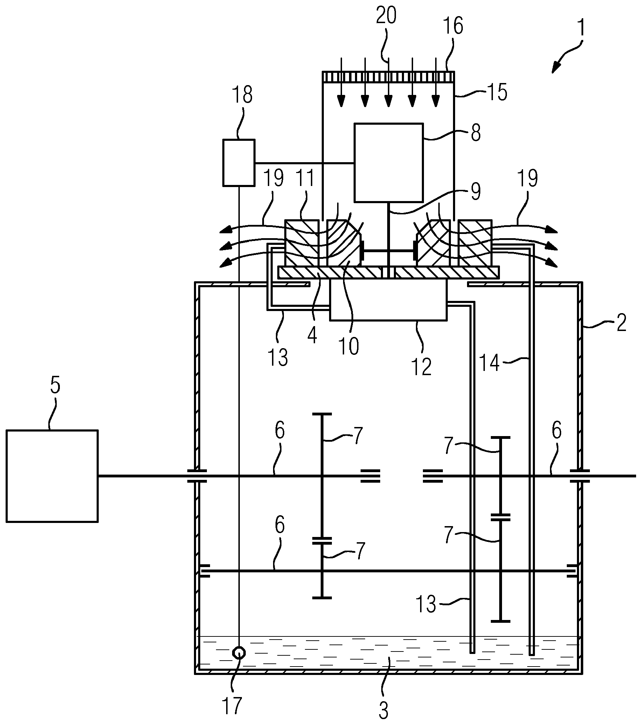

Weitere Merkmale und Vorteile der vorliegenden Erfindung werden anhand der nachfolgenden Beschreibung einer erfindungsgemäßen Ausführungsform eines Getriebes unter Bezugnahme auf die beiliegende Zeichnung deutlich.

Die Zeichnung zeigt schematisch ein Getriebe 1, das ein Getriebegehäuse 2 mit einem vorliegend als Ölsumpf ausgebildeten Ölreservoir 3 und einen eine Öffnung des Getriebegehäuses 2 verschließenden Getriebegehäusedeckel 4 aufweist. Innerhalb des Getriebegehäuses 2 sind in bekannter Weise die über einen Motor 5 angetriebenen Getriebewellen 6 und die an diesen gehaltenen Zahnräder 7 aufgenommen. Zur Kühlung des Öls umfasst das Getriebe 1 ferner eine Kühleinheit mit einem Antriebsmotor 8, einer von dem Antriebsmotor 8 angetriebenen Antriebswelle 9, einem Lüfter 10, einem Kühler 11 und einer Ölförderpumpe 12. Der Antriebsmotor 8 ist außen an dem Getriebegehäusedeckel 4 gehalten und vorliegend als Elektromotor ausgebildet. Auch der Lüfter 10 und der Kühler 11 sind außen an dem Getriebegehäusedeckel 4 montiert, wobei der Kühler 11 vorliegend ein ringförmiger Radialkühler ist, der den Lüfter 10 umgibt. Die Ölförderpumpe 12, die Öl durch Ölförderleitungen 13 aus dem Ölreservoir 3 in den Kühler 11 pumpt, der wiederum über eine Ölrückführleitung 14 mit dem Ölreservoir 3 verbunden ist, ist hingegen innen an dem Getriebegehäusedeckel 4 montiert. Sowohl der Lüfter 10 als auch die Ölförderpumpe 12 sind kinematisch mit der sich durch den Getriebegehäusedeckel 4 hindurch erstreckende Antriebswelle 9 gekoppelt, so dass sie entsprechend über den Antriebsmotor 8 angetrieben werden können. An dem Getriebegehäusedeckel 4 ist ferner eine den Antriebsmotor 8 und den Lüfter 10 abdeckende Haube 15 lösbar befestigt, die eine mit einem Filter 16 versehene Luftansaugöffnung aufweist. Innerhalb des Getriebegehäuses 2 ist ein die aktuelle Öltemperatur erfassender Sensor 17 positioniert, der vorliegend in das Ölreservoir eingetaucht ist und die erfassten Signale an eine Antriebsmotorsteuerung 18 übermittelt. Die Antriebsmotorsteuerung 18 ist dazu ausgelegt, die Drehzahl des Antriebsmotors 8 in Abhängigkeit von den vom Sensor 17 erfassten Signalen basierend auf einer Soll-Öltemperatur zu regeln.

Während des Betriebs des Getriebes 1 treibt der Motor 5 die Getriebewellen 6 und die daran gehaltenen Zahnräder 7 drehend an. Durch die anfallende Verlustleistung wird das innerhalb des Getriebegehäuses 2 vorhandene Öl erwärmt. Zur Kühlung wird es unter Einsatz der von dem Antriebsmotor 8 angetriebenen Ölförderpumpe 12 durch die Ölförderleitungen 13 in den Kühler 11 gepumpt und von dort aus über die Ölrückführleitung 14 zurück ins Ölreservoir 3 geleitet. Der Kühler 11 wird radial von einem von dem ebenfalls durch den Antriebsmotor 8 angetriebenen Lüfter 10 erzeugten Luftstrom durchströmt, wie es durch die Pfeile 19 angedeutet ist, wobei der Luftstrom dem Öl Wärme entzieht und dieses entsprechend kühlt. Der Lüfter 10 wird dabei entsprechend der Pfeile 20 mit über den Filter 16 gefilterter Umgebungsluft gespeist. Der Sensor 17 erfasst die aktuelle Öltemperatur, die in der Antriebsmotorsteuerung 18 mit einer vorab einstellbaren Soll-Temperatur verglichen wird. Weicht die erfasste Ist-Temperatur nach oben von der Soll-Temperatur ab, so wird die Drehzahl des Antriebsmotors 8 zur Erzielung der gewünschten Kühlleistung entsprechend geregelt.

Ein wesentlicher Vorteil des zuvor beschriebenen Getriebes 1 besteht darin, dass der Getriebegehäusedeckel 4, der Antriebsmotor 8, der Lüfter 10, der Kühler 11 und die Ölförderpumpe 12 erfindungsgemäß eine über den Getriebegehäusedeckel 4 an dem Getriebegehäuse 2 befestigte, sehr kompakt ausgebildete Kühleinheit definieren, die gut zugänglich ist und sich leicht montieren und demontieren lässt, was die Wartung und Reparatur der Kühleinheit bzw. ihrer Komponenten stark erleichtert. Darüber hinaus kann eine solche Kühleinheit an nahezu jeder Öffnung eines Getriebegehäuses 2 angeordnet werden, die mit einem Getriebegehäusedeckel 4 verschlossen ist, was den Konstrukteuren bei der Getriebeauslegung viele Freiheiten lässt. Dank der Tatsache, dass der Antriebsmotor 8 erfindungsgemäß als separater Motor vorgesehen ist, also zusätzlich zu dem die Getriebewellen 2 des Getriebes 1 antreibenden Motor 5, lassen sich über geeignete Wahl der Drehzahl des separaten Antriebsmotors 8 zudem der dem Kühler 11 zugeführte Ölvolumenstrom ebenso wie der vom Lüfter 10 generierte Kühlluftvolumenstrom unabhängig von der Betriebsweise des Getriebes 1 einstellen. Ein weiterer Vorteil, der mit dem Einsatz eines separaten Antriebsmotors 8 zum Antreiben der Ölförderpumpe 12 und des Lüfters 10 einhergeht, besteht darin, dass die Ölförderpumpe 12 und der Lüfter 10 nicht drehrichtungsunabhängig ausgelegt werden müssen. Entsprechend können diese Komponenten optimiert ausgelegt werden, was einen geringeren Energieverbrauch ebenso wie eine Reduzierung der Schallemissionen des Lüfters 10 nach sich zieht.

## Patentansprüche

1. Getriebe (1) umfassend ein Getriebegehäuse (2) mit einem Ölreservoir (3) und einem eine Öffnung des Getriebegehäuses (2) verschließenden Getriebegehäusedeckel (4), Zahnräder (7) aufnehmende Getriebewellen (6), die über einen Motor (5) antreibbar sind, einen außen am Getriebegehäuse (2) angeordneten Lüfter (10), einen außen am Getriebegehäuse (2) angeordneten Kühler (11), dem von dem Lüfter (10) Kühlluft zugeführt wird, eine Ölförderpumpe (12), die Öl durch Ölförderleitungen (13) aus dem Ölreservoir (3) in den Kühler (11) pumpt, und eine Ölrückführleitung (14), die Öl aus dem Kühler (11) zurück in das Getriebegehäuse (2) leitet, **dadurch gekennzeichnet, dass** ein separater Antriebsmotor (8) vorgesehen ist, der den Lüfter (10) und die Ölförderpumpe (12) unabhängig von den Getriebewellen (6) des Getriebes (1) antreibt, und dass der Antriebsmotor (8), der Lüfter (10), der Kühler (11) und die Ölförderpumpe (12) an dem Getriebegehäusedeckel (4) befestigt sind.

2. Getriebe (1) nach Anspruch 1, **dadurch gekennzeichnet, dass** der Antriebsmotor (8) ein Elektromotor ist.

3. Getriebe (1) nach einem der vorhergehenden Ansprüche, **dadurch gekennzeichnet, dass** der Kühler (11) ein ringförmiger Radialkühler ist, der den Lüfter (10) umgibt und dem die Kühlluft von dem Lüfter (10) radial zugeführt wird.

4. Getriebe (1) nach einem der vorhergehenden Ansprüche, **dadurch gekennzeichnet, dass** die Ölförderpumpe (12) innen an dem Getriebegehäusedeckel (4) befestigt ist.

5. Getriebe (1) nach einem der vorhergehenden Ansprüche, **dadurch gekennzeichnet, dass** ein den Antriebsmotor (8) und den Lüfter (10) abdeckende Haube (15) vorgesehen ist, die eine mit einem Filter (16) versehene Luftansaugöffnung aufweist.

6. Getriebe (1) nach einem der vorhergehenden Ansprüche, **dadurch gekennzeichnet, dass** ein die aktuelle Öltemperatur im Getriebegehäuse (2) erfassender Sensor (17) vorgesehen ist, und dass eine Antriebsmotorsteuerung (18) vorgesehen und dazu ausgelegt ist, die Drehzahl des Antriebsmotors (8) in Abhängigkeit von den vom Sensor (17) erfassten Signalen basierend auf einer Soll-Öltemperatur zu regeln.

## Claims

1. Transmission (1) comprising a transmission casing (2) with an oil reservoir (3) and a transmission casing cover (4) which closes off an opening in the transmission casing (2), transmission shafts (6) which have gearwheels (7) and can be driven by means of an engine (5), a fan (10) which is arranged on the outside of the transmission casing (2), a radiator (11) which is arranged on the outside of the transmission casing (2) and to which cooling air is fed by the fan (11), an oil feed pump (12) which pumps oil through oil feed lines (13) from the oil reservoir (3) into the radiator (11), and an oil return line (14) which feeds oil out of the radiator (11) back into the transmission casing (2), **characterized in that** a separate drive engine (8) is provided which drives the fan (10) and the oil feed pump (12) independently of the transmission shafts (6) of the transmission (1), and **in that** the drive engine (8), the fan (10), the radiator (11) and the oil feed pump (12) are attached to the transmission casing cover (4).

2. Transmission (1) according to Claim 1, **characterized in that** the drive engine (8) is an electric engine.

3. Transmission (1) according to either of the preceding claims, **characterized in that** the radiator (11) is an annular radial radiator which surrounds the fan (10) and to which the cooling air is fed radially by the fan (10).

4. Transmission (1) according to one of the preceding claims, **characterized in that** the oil feed pump (12) is attached to the inside of the transmission casing cover (4).

5. Transmission (1) according to one of the preceding claims, **characterized in that** a hood (15) which covers the drive engine (8) and the fan (10) is provided, said hood (15) having an air intake opening which is provided with a filter (16) .

6. Transmission (1) according to one of the preceding claims, **characterized in that** a sensor (17) which senses the current oil temperature in the transmission casing (2) is provided, and **in that** a drive engine controller (18) is provided and is configured to regulate the rotational speed of the drive engine (8) in accordance with the signals sensed by the sensor (17) and on the basis of a setpoint oil temperature.

## Revendications

1. Transmission (1), comprenant un carter (2), ayant un réservoir (3) d'huile et un couvercle (4) du carter de la transmission fermant une ouverture du carter (2) de la transmission, des arbres (6) de la transmission, qui reçoivent des roues (7) dentées et qui peuvent être entraînés par un moteur (5), un ventilateur (10) disposé à l'extérieur du carter (2) de la transmission, un refroidisseur (11) disposé à l'extérieur du carter (2) de la transmission et auquel de l'air de refroidissement peut être envoyé par le ventilateur (10), une pompe (12) pour véhiculer de l'huile, qui, par des conduits (13) pour véhiculer de l'huile, pompe de l'huile du réservoir (3) d'huile au refroidisseur (11), et un conduit (14) de retour de l'huile, qui retourne de l'huile du refroidisseur (11) au carter (2) de la transmission, **caractérisée en ce qu'**il est prévu un moteur (8) d'entraînement distinct, qui entraîne le ventilateur (10) et la pompe (12) pour véhiculer de l'huile, indépendamment des arbres (6) de la transmission (1) et **en ce que** le moteur (8) d'entraînement, le ventilateur (10), le refroidisseur (11) et la pompe (12) pour véhiculer de l'huile sont fixés au couvercle (4) du carter de la transmission.

2. Transmission (1) suivant la revendication 1, **caractérisée en ce que** le moteur (8) d'entraînement est un moteur électrique.

3. Transmission (1) suivant l'une des revendications précédentes, **caractérisée en ce que** le refroidisseur (11) est un refroidisseur radial de forme annulaire, qui entoure le ventilateur (10) et auquel l'air de refroidissement est envoyé radialement par le ventilateur (10).

4. Transmission (1) suivant l'une des revendications précédentes, **caractérisée en ce que** la pompe (12) pour transporter de l'huile est fixée à l'intérieur au couvercle (4) du carter de la transmission.

5. Transmission (1) suivant l'une des revendications précédentes, **caractérisée en ce qu'**il est prévu une hotte (15), qui recouvre le moteur (8) d'entraînement et le ventilateur (10) et qui a une ouverture d'aspiration d'air pourvue d'un filtre (16).

6. Transmission (1) suivant l'une des revendications précédentes, **caractérisée en ce qu'**il est prévu un capteur (17) détectant la température instantanée de l'huile dans le carter (2) de la transmission et **en ce qu'**une commande (18) de moteur d'entraînement est prévue et conçue pour régler, sur la base d'une température d'huile de consigne, la vitesse de rotation du moteur (8) d'entraînement en fonction de signaux détectés par le capteur (17).
